# EUROPEAN PATENT APPLICATION

(11) **EP 2 837 472 A2**
(43) Date of publication of application: **18.02.2015**
(21) Application number: 14179260.6
(22) Date of filing: 31.07.2014
(51) Int. Cl.: B25J 9/16

(54) **Robot system, robot control apparatus, method for controlling robot**

(30) Priority: 09.08.2013 JP 2013165923
(71) Applicant: Kabushiki Kaisha Yaskawa Denki, Kitakyushu-shi, Fukuoka 806-0004 (JP)
(72) Inventor: Nagai, Ryoichi, Kitakyushu-shi, Fukuoka 806-0004 (JP); Hashiguchi, Yukio, Kitakyushu-shi, Fukuoka 806-0004 (JP); Murai, Shinji, Kitakyushu-shi, Fukuoka 806-0004 (JP)
(74) Representative: Viering, Jentschura & Partner Patent- und Rechtsanwälte

(57) **Abstract**

A robot system includes a robot and a controller. An arm includes joints. Actuators drive the joints. Sensors detect operation states of the actuators. The probe is mounted on the arm. A force sensor detects force received by the probe. The controller controls the robot. A determination section determines whether the force from a structure disposed at a position on a work stand satisfies a condition. An operation state acquisition section acquires the operation states when the force satisfies the condition. A coordinate calculation section calculates a position coordinate of the probe based on the operation states. A position correction amount calculation section calculates a correction amount of a position of the work stand relative to the robot based on the position coordinate.

## Description

### BACKGROUND

### FIELD OF THE INVENTION

The present invention relates to a robot system, a robot control apparatus, and a method for controlling a robot.

### DISCUSSION OF THE BACKGROUND

Japanese Unexamined Patent Application Publication 11-123682 discloses a visual sensor mounted on a robot that is installed on an automated guided vehicle. The visual sensor detects a position of a marker set on a work stand, and based on the detected position of the marker, a position at which the automated guided vehicle is stopped is detected.

The contents of Japanese Unexamined Patent Application Publication 11-123682 are incorporated herein by reference in their entirety.

Unfortunately, in the above technique, the visual sensor, which cannot be used while the robot is working, is provided for the only purpose of detecting the position at which the automated guided vehicle is stopped.

The present invention has been made in view of the above-described circumstances, and it is an object of the present invention to provide a robot system, a robot control apparatus, and a method for controlling a robot that ensure correction of the position of a work stand relative to a robot without using a visual sensor.

### SUMMARY

According to one aspect of the present disclosure, a robot system includes a robot and a controller. The robot includes an arm, a plurality of actuators, a plurality of sensors, a probe, and a force sensor. The arm includes a plurality of joints. The plurality of actuators are configured to drive the plurality of joints. The plurality of sensors are configured to detect operation states of the plurality of actuators. The probe is mounted on the arm. The force sensor is configured to detect force received by the probe. The controller is configured to control the robot, and includes a determination section, an operation state acquisition section, a coordinate calculation section, and a position correction amount calculation section. The determination section is configured to determine whether the force received by the probe from a structure disposed at a predetermined position on a work stand satisfies a predetermined condition. The operation state acquisition section is configured to acquire the operation states of the plurality of actuators when the force received by the probe satisfies the predetermined condition. The coordinate calculation section is configured to calculate a position coordinate of the probe based on the operation states of the plurality of actuators. The position correction amount calculation section is configured to calculate a correction amount of a position of the work stand relative to the robot based on the position coordinate of the probe.

In the one aspect of the present disclosure, the structure on the work stand may include a plurality of structures.

In the one aspect of the present disclosure, the controller may further include a direction correction amount calculation section configured to calculate a correction amount of the work stand in a reference direction relative to the robot based on the position coordinate of the probe calculated for each of the plurality of structures.

In the one aspect of the present disclosure, the determination section may be configured to determine whether the probe is in contact with the structure in a predetermined posture.

In the one aspect of the present disclosure, the probe and the structure may have shapes that are fittable with each other. The determination section may be configured to determine whether the probe and the structure are fitted with each other.

In the one aspect of the present disclosure, the robot system may further include a contact control unit configured to control the plurality of actuators to bring the probe into contact with the structure. Based on force received by the probe when motive power in a plurality of directions is applied to the probe, the contact control unit may be configured to select one direction among the plurality of directions as a displacement direction of the probe.

In the one aspect of the present disclosure, the contact control unit may be configured to determine operation states of the plurality of actuators based on an inverse kinetics algorithm when the motive power in the plurality of directions is applied to the probe.

In the one aspect of the present disclosure, the structure may include three surfaces intersecting to each other to define a recessed portion. The determination section may be configured to determine whether the probe is in contact with the three surfaces.

In the one aspect of the present disclosure, the robot system may further include a contact control unit configured to control the plurality of actuators to bring the probe into contact with the structure. The contact control unit may be configured to displace the probe while keeping the probe in a predetermined posture.

In the one aspect of the present disclosure, the contact control unit may be configured to determine the operation states of the plurality of actuators based on an inverse kinetics algorithm to which a limitation condition to keep the probe in the predetermined posture is added.

According to another aspect of the present disclosure, a robot control apparatus is configured to control a robot. The robot includes an arm, a plurality of actuators, a plurality of sensors, a probe, and a force sensor. The arm includes a plurality of joints. The plurality of actuators are configured to drive the plurality of joints. The plurality of sensors are configured to detect operation states of the plurality of actuators. The probe is mounted on the arm. The force sensor is configured to detect force received by the probe. The robot control apparatus includes a determination section, an operation state acquisition section, a coordinate calculation section, and a position correction amount calculation section. The determination section is configured to determine whether the force received by the probe from a structure disposed at a predetermined position on a work stand satisfies a predetermined condition. The operation state acquisition section is configured to acquire the operation states of the plurality of actuators when the force received by the probe satisfies the predetermined condition. The coordinate calculation section is configured to calculate a position coordinate of the probe based on the operation states of the plurality of actuators. The position correction amount calculation section is configured to calculate a correction amount of a position of the work stand relative to the robot based on the position coordinate of the probe.

In the another aspect of the present disclosure, the structure on the work stand may include a plurality of structures.

In the another aspect of the present disclosure, the robot control apparatus may further include a direction correction amount calculation section configured to calculate a correction amount of the work stand in a reference direction relative to the robot based on the position coordinate of the probe calculated for each of the plurality of structures.

In the another aspect of the present disclosure, the determination section may be configured to determine whether the probe is in contact with the structure in a predetermined posture.

In the another aspect of the present disclosure, the probe and the structure may have shapes that are fittable with each other. The determination section may be configured to determine whether the probe and the structure are fitted with each other.

In the another aspect of the present disclosure, the robot control apparatus may further include a contact control unit configured to control the plurality of actuators to bring the probe into contact with the structure. Based on force received by the probe when motive power in a plurality of directions is applied to the probe, the contact control unit may be configured to select one direction among the plurality of directions as a displacement direction of the probe.

In the another aspect of the present disclosure, the contact control unit may be configured to determine operation states of the plurality of actuators based on an inverse kinetics algorithm when the motive power in the plurality of directions is applied to the probe.

In the another aspect of the present disclosure, the structure may include three surfaces intersecting to each other to define a recessed portion. The determination section may be configured to determine whether the probe is in contact with the three surfaces.

In the another aspect of the present disclosure, the robot control apparatus may further include a contact control unit configured to control the plurality of actuators to bring the probe into contact with the structure. The contact control unit may be configured to displace the probe while keeping the probe in a predetermined posture.

In the another aspect of the present disclosure, the contact control unit may be configured to determine the operation states of the plurality of actuators based on an inverse kinetics algorithm to which a limitation condition to keep the probe in the predetermined posture is added.

In the another aspect of the present disclosure, a robot system includes the robot control apparatus.

In the another aspect of the present disclosure, the robot system may further include the robot.

According to the other aspect of the present disclosure, a method is for controlling a robot for controlling a robot. The robot includes an arm, a plurality of actuators, a plurality of sensors, a probe, and a force sensor. The arm includes a plurality of joints. The plurality of actuators are configured to drive the plurality of joints. The plurality of sensors are configured to detect operation states of the plurality of actuators. The probe is mounted on the arm. The force sensor is configured to detect force received by the probe. The method includes determining whether the force received by the probe from a structure disposed at a predetermined position on a work stand satisfies a predetermined condition. The operation states of the plurality of actuators are acquired when the force received by the probe satisfies the predetermined condition. A position coordinate of the probe is calculated based on the operation states of the plurality of actuators. A correction amount of a position of the work stand relative to the robot is calculated based on the position coordinate of the probe.

The aspects of the present disclosure ensure correction of the position of the work stand relative to the robot without using a visual sensor.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic view of a robot system according to an embodiment;
FIG. 2 is a block diagram illustrating an exemplary configuration of the robot system;
FIG. 3 shows an exemplary area length table;
FIG. 4 shows an exemplary hole coordinate table;
FIG. 5 shows an exemplary origin coordinate table;
FIG. 6 is a diagram illustrating an example of how to calculate a position correction amount;
FIG. 7 is a diagram illustrating an example of how to apply the position correction amount;
FIG. 8 is a diagram illustrating an example of how to calculate a direction correction amount;
FIG. 9 is a diagram illustrating an example of how to apply the direction correction amount;
FIG. 10 is a flowchart illustrating contact control according to a first embodiment;
FIGs. 11A to 11C schematically illustrate the contact control according to the first embodiment;
FIG. 12 schematically illustrates an exemplary configuration of a distal end of an arm and jigs on a work stand;
FIG. 13 is a flowchart illustrating contact control according to a second embodiment;
FIG. 14 schematically illustrates the contact control according to the second embodiment; and
FIG. 15 is a block diagram illustrating an exemplary configuration of the robot system in a third embodiment and a fourth embodiment.

### DESCRIPTION OF THE EMBODIMENTS

The embodiments will now be described with reference to the accompanying drawings, wherein like reference numerals designate corresponding or identical elements throughout the various drawings.

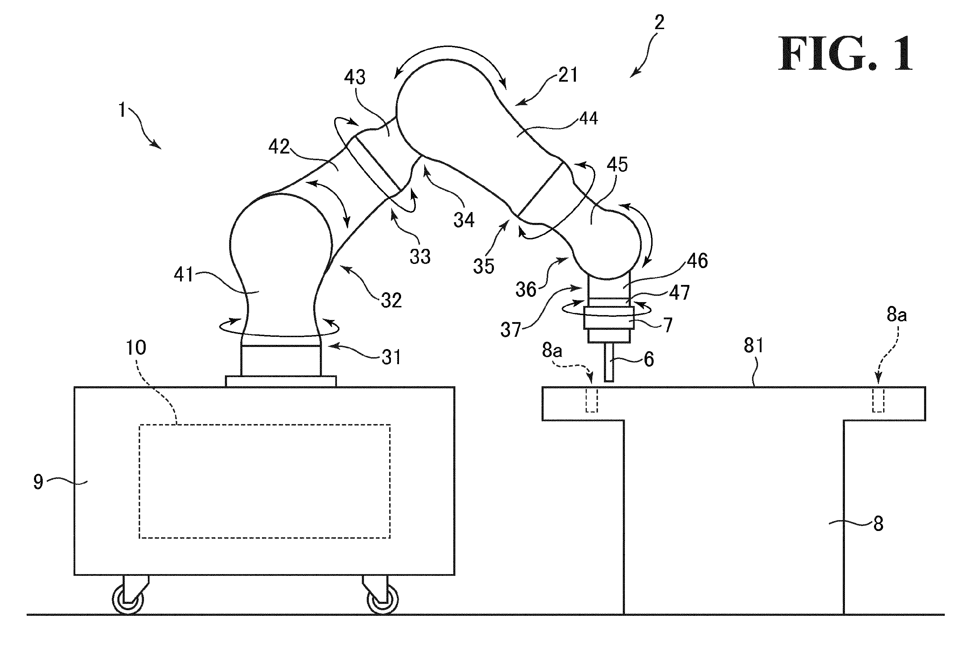

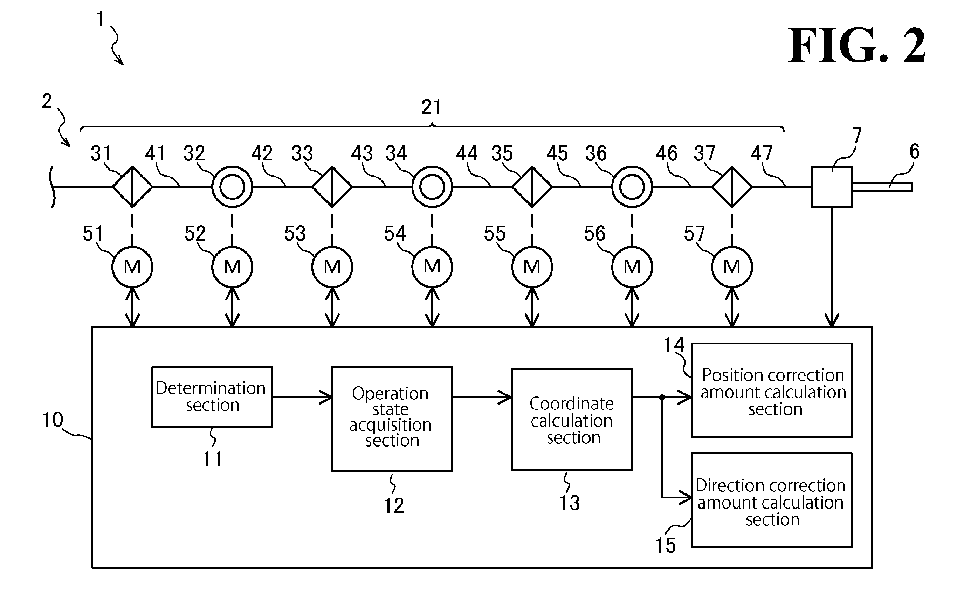

FIG. 1 is a schematic view of a robot system 1 according to an embodiment. FIG. 2 is a block diagram illustrating an exemplary configuration of the robot system 1.

The robot system 1 includes a robot 2 and a controller 10. The robot 2 includes an articulated arm 21. The controller 10 controls the robot 2. The controller 10 is an example of the robot control apparatus. The robot 2 is disposed on a carriage 9, and movable relative to a work stand 8 and positioned relative to the work stand 8. The controller 10 is accommodated in the carriage 9. The arm 21 of the robot 2 will not be limited to one arm but may have two or more arms.

The arm 21 of the robot 2 includes a plurality of rotatable joints 31 to 37, and a plurality of links 41 to 47 coupled to each other through the joints 31 to 37. Each of the joints 31 to 37 is rotatable in directions indicated by the two-headed arrows shown in FIG. 1. Each of the joints 31 to 37 has a rotation axis that is orthogonal to the rotation axis of an adjacent joint. In this embodiment, the arm 21 of the robot 2 includes seven joints 31 to 37, which provide seven degrees of freedom. Specifically, the arm 21 of the robot 2 includes one redundant degree of freedom in addition to six degrees of freedom, which are necessary for making changes in position and posture (three degrees of translational freedom and three degrees of rotational freedom). It should be noted that the number of joints of the arm 21 may be six.

The robot 2 includes a plurality of servomotors 51 to 57 to drive the joints 31 to 37 into rotation. The servomotors 51 to 57 drive the joints 31 to 37 into rotation in response to a command from the controller 10. The servomotors 51 to 57 include encoders to detect a rotation angle and output a detection signal that corresponds to the rotation angle. The servomotors 51 to 57 are examples of the actuators to drive the joints. The encoders are examples of the sensors to detect operation states of the actuators. The rotation angles of the servomotors 51 to 57 are examples of the operation states of the actuators.

A rod-shaped probe 6 is disposed on the distal end of the arm 21 of the robot 2. A force sensor 7 is disposed between the distal end of the arm 21 and the probe 6. The force sensor 7 detects force received by the probe 6, and outputs to the controller 10 a detection signal that corresponds to the received force. An example of the force sensor 7 is a six-axis force sensor to detect force in three translational directions and in three rotational directions. Other examples of the force sensor 7 than the rod-shaped probe 6 include end effectors such as a hand.

A plurality of holes 8a are formed at a plurality of predetermined positions on a surface 81 of the work stand 8. The holes 8a and the probe 6 are fittable with each other. The portions of the work stand 8 in which the holes 8a are formed are examples of the structure disposed on the work stand 8. In this embodiment, the probe 6 is a columnar rod having a circular cross-section, and the hole 8a is a bottomed hole having a circular cross-section. The shape of the probe 6 and the shape of the hole 8a are not particularly limited insofar as the probe 6 and the hole 8a are fittable with each other. When the probe 6 is fitted with the hole 8a, the probe 6 has its posture accord with the shape of the hole 8a to enable the probe 6 to contact the inner surface of the hole 8a. For example, when the probe 6 is fitted with the hole 8a, a gap of approximately 10 µm is formed between the outer surface of the probe 6 and the inner surface of the hole 8a.

The controller 10 includes a microprocessor and a memory. The memory stores programs to be executed by the microprocessor and data used for control. The programs may be provided from an information recording medium readable by a computer or may be provided through a communication line. The controller 10 performs various types of processing in accordance with the programs read from the memory.

For example, the controller 10 performs such work processing as to subject an object to a predetermined kind of work such as mounting of parts. In the work processing, the controller 10 drives the servomotors 51 to 57 based on data indicating operation content, thus enabling the arm 21 of the robot 2 to perform the predetermined work. In the data indicating the operation content, the target position of the arm 21 is described using a work stand coordinate system, which is based on the work stand 8, instead of using a robot coordinate system, which is based on the robot 2. Thus, the controller 10 stores the position of the origin of the work stand coordinate system in the robot coordinate system, and uses the position of the origin to calculate the target position of the arm 21 in the robot coordinate system.

Furthermore, during the time between installation of the robot 2 and the above-described work processing, the controller 10 performs calibration processing described below. When the installed robot 2 is displaced from a predetermined position and a predetermined posture, the target position of the arm 21 calculated by the controller 10 in the above-described work processing may be displaced from an originally intended target position. This is addressed by the controller 10 performing the calibration processing prior to the work processing. The calibration processing performed by the controller 10 will be described in detail below.

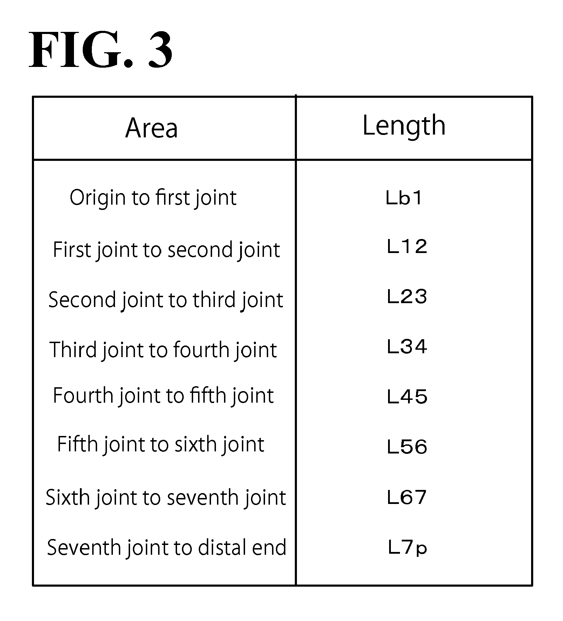

The tables in FIGs. 3 to 5 show exemplary data stored in the memory of the controller 10 in association with the calibration processing.

FIG. 3 shows an exemplary area length table. The area length table shows the lengths of all the arm sections ranging from the origin of the robot coordinate system to the distal end of the probe 6. These arm sections are delimited by the joints 31 to 37, and the lengths between adjacent pairs of the joints 31 to 37 respectively correspond to the lengths of the links 41 to 46. The area length table is used to calculate a position coordinate of the distal end of the probe 6.

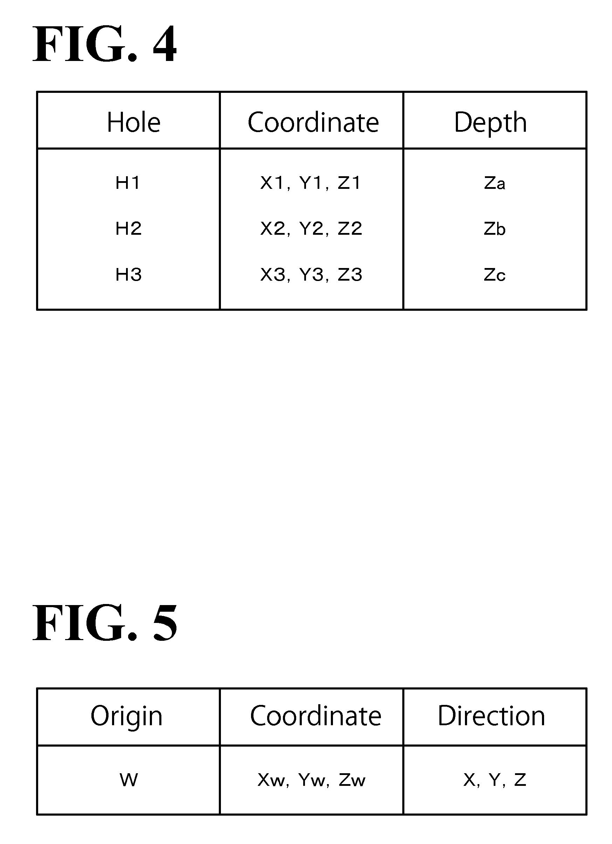

FIG. 4 shows an exemplary hole coordinate table. The hole coordinate table shows the positions of the holes 8a in the robot coordinate system in the case where the robot 2 is correctly positioned relative to the work stand 8. The position of the hole 8a corresponds to the position of the probe 6 when the probe 6 is fitted with the hole 8a. The hole coordinate table also shows the depths of the holes 8a. The hole coordinate table is used to calculate the amount of position correction and the amount of direction correction, which are respectively for calculating the position and the reference directions of the work stand 8 relative the robot 2.

FIG. 5 shows an exemplary origin coordinate table. The origin coordinate table shows the position of the origin of the work stand coordinate system in the robot coordinate system. The origin coordinate table also shows three-axis reference directions of the work stand coordinate system in the robot coordinate system. The origin position and the reference directions of the work stand coordinate system shown in the origin coordinate table are targets of calibration in the calibration processing, and are also used to calculate the target position of the arm 21 in the work processing.

Referring back to FIG. 2, the controller 10 includes functional sections associated with the calibration processing; namely, a determination section 11, an operation state acquisition section 12, a coordinate calculation section 13, a position correction amount calculation section 14, and a direction correction amount calculation section 15. These functional sections are implemented when the microprocessor of the controller 10 executes the programs stored in the memory.

The following description concerns processing after the probe 6 has been fitted with the hole 8a of the work stand 8. Then, processing prior to the probe 6 being fitted with the hole 8a of the work stand 8 (processing as a contact control unit) will be described in detail later.

The determination section 11 determines whether the probe 6 is fitted with the hole 8a of the work stand 8 based on force that is received by the probe 6 and detected by the force sensor 7. When the determination section 11 determines that the probe 6 is fitted with the hole 8a of the work stand 8, the determination section 11 outputs to the operation state acquisition section 12 a notification indicating that the probe 6 is fitted with the hole 8a. The determination as to whether the probe 6 is fitted with the hole 8a of the work stand 8 will be described in detail later.

When the determination section 11 notifies the operation state acquisition section 12 of the fitting of the probe 6 with the hole 8a of the work stand 8, the operation state acquisition section 12 acquires rotation angles of the servomotors 51 to 57 detected by the servomotors 51 to 57, and outputs the acquired rotation angles to the coordinate calculation section 13. That is, the rotation angles of the servomotors 51 to 57 that the operation state acquisition section 12 acquires here indicate states of the joints 31 to 37 of the arm 21 with the probe 6 fitted with the hole 8a of the work stand 8.

When the coordinate calculation section 13 receives the rotation angles of the servomotors 51 to 57 from the operation state acquisition section 12, the coordinate calculation section 13 calculates a position coordinate of the distal end of the probe 6 based on the rotation angles of the servomotors 51 to 57, and outputs the calculated position coordinate to the position correction amount calculation section 14 and the direction correction amount calculation section 15. Specifically, based on the rotation angles of the servomotors 51 to 57 and the length of each arm section read from the area length table of FIG. 3, the coordinate calculation section 13 calculates the position coordinate of the distal end of the probe 6 in the robot coordinate system.

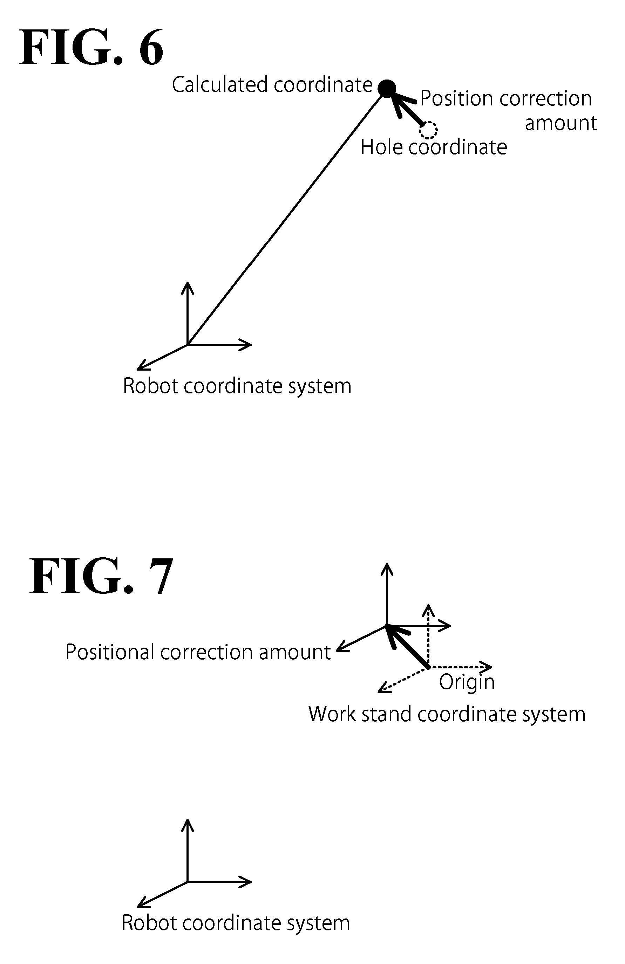

When the position correction amount calculation section 14 receives the position coordinate of the distal end of the probe 6 from the coordinate calculation section 13, the position correction amount calculation section 14 calculates a position correction amount for correcting the position of the work stand 8 relative to the robot 2 based on the position coordinate of the distal end of the probe 6. Specifically, as shown in FIG. 6, the calculated position correction amount is the difference between the calculated position coordinate of the distal end of the probe 6 and the position coordinate of a hole 8a read from the hole coordinate table of FIG. 4.

The position correction amount thus calculated is used to correct the position of the work stand 8 relative to the robot 2 in the manner shown in FIG. 7. For example, the controller 10 adds the calculated position correction amount to the position coordinate of the origin of the work stand coordinate system in the robot coordinate system that has been read from the origin coordinate table of FIG. 5, so as to rewrite the content of the origin coordinate table.

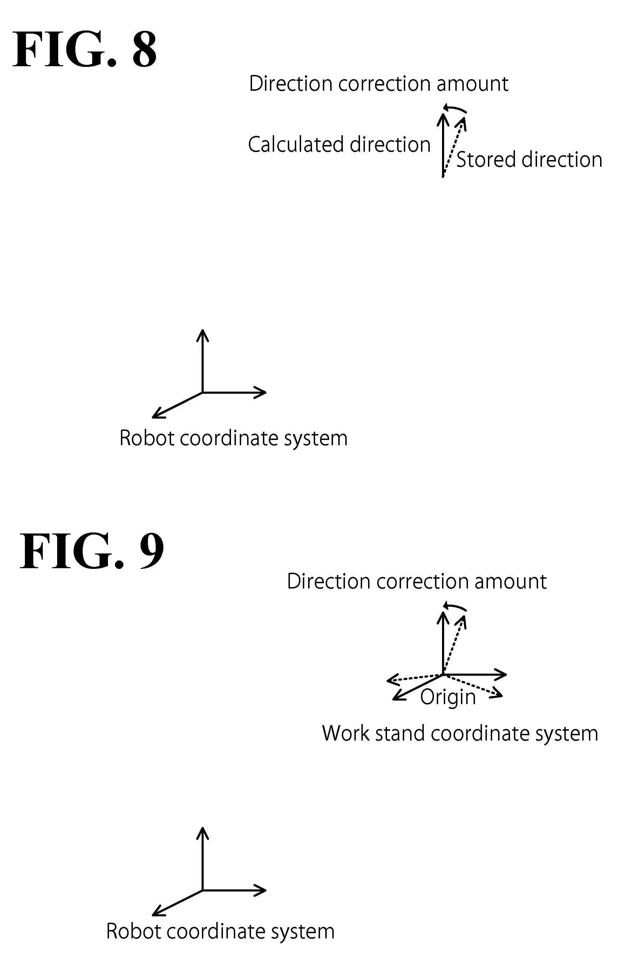

When the direction correction amount calculation section 15 receives the position coordinate of the distal end of the probe 6 from the coordinate calculation section 13, the direction correction amount calculation section 15 calculates a direction correction amount for correcting the reference directions of the work stand 8 relative to the robot 2 based on the position coordinate of the distal end of the probe 6 calculated for each of the plurality of holes 8a. If the position coordinates of the plurality of holes 8a are already known, the position coordinates of the plurality of holes 8a may serve as a basis for defining one or a plurality of directions. For example, if position coordinates of two holes 8a are available, it is possible to define a longitudinal direction of a line segment containing the two holes 8a. If position coordinates of three holes 8a are available, it is possible to define a normal direction of a plane containing the three holes 8a. In view of this, the direction correction amount is as shown in FIG. 8; that is, the direction correction amount may be assumed the difference between a direction defined by the position coordinates of the distal end of the probe 6 calculated for the plurality of holes 8a (calculated direction) and a direction defined by the position coordinates of the plurality of holes 8a read from the hole coordinate table of FIG. 4 (stored direction). The stored direction may be stored in the hole coordinate table in advance.

The direction correction amount thus calculated is used to correct the reference directions of the work stand 8 relative to the robot 2 in the manner shown in FIG. 9. For example, the controller 10 adds the calculated direction correction amount to the reference directions of the work stand coordinate system in the robot coordinate system that have been read from the origin coordinate table of FIG. 5, so as to rewrite the content of the origin coordinate table.

The above-described calibration processing ensures calibration of the origin position and the reference directions of the work stand coordinate system in the robot coordinate system. This, as a result, eliminates or minimizes displacement of the target position of the arm 21 calculated by the controller 10 in the subsequent work processing relative to the originally intended target position.

The rewriting of the origin coordinate table should not be construed in a limiting sense. Another possible example is to store the calculated position correction amount and the calculated direction correction amount, and apply the position correction amount and the direction correction amount every time the controller 10 calculates the target position of the arm 21 in the robot coordinate system in the work processing. Specifically, in the data indicating the operation content, the target position of the arm 21 is described using the work stand coordinate system. The controller 10 adds a vector from the origin of the robot coordinate system to the origin of the work stand coordinate system to a vector from the origin of the work stand coordinate system to the target position of the arm 21, so as to calculate the target position of the arm 21 in the robot coordinate system. In view of this, it is possible to add vectors of the correction amounts in this calculation process.

Furthermore, putting the basis of calculating the direction correction amount on the position coordinates of the plurality of holes 8a should not be construed in a limiting sense. Another possible example is to put the basis of calculating the direction correction amount on structure shape information such as a boring direction of the holes 8a stored in the hole coordinate table in advance, and on posture information of the probe 6 calculated based on the rotation angles of the servomotors 51 to 57. Specifically, the extending direction of the probe 6 fitted with the hole 8a corresponds to the boring direction of the hole 8a. Thus, the calculated direction correction amount may be assumed the difference between the extending direction of the probe 6 calculated based on the rotation angles of the servomotors 51 to 57 and the boring direction of the hole 8a read from the hole coordinate table.

This embodiment eliminates the need for using a visual sensor in calculating the position correction amount for correcting the position of the work stand 8 relative to the robot 2 and in calculating the direction correction amount for correcting the reference directions of the work stand 8 relative to the robot 2. Using a visual sensor for position calibration and direction calibration may degrade the calibration accuracy due to the influence of the illumination environment and luster of objects in a visual range. In contrast, this embodiment eliminates or minimizes such influence and ensures accurate calibration.

### [First Embodiment of Contact Control]

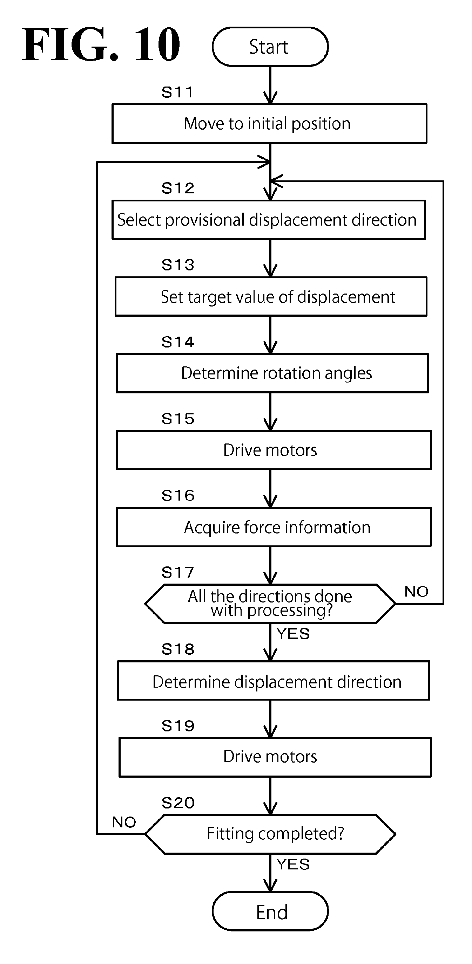

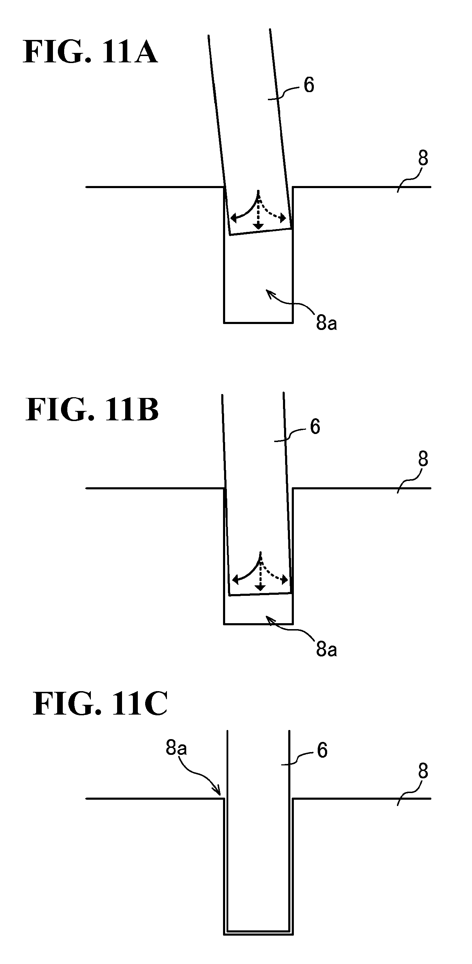

Description will be made with regard to a first embodiment of the contact control of fitting the probe 6 with the holes 8a of the work stand 8. FIG. 10 is a flowchart illustrating the contact control according to the first embodiment, and FIGs. 11A to 11C schematically illustrate the contact control according to the first embodiment. In this contact control, the controller 10 drives the servomotors 51 to 57 to fit the probe 6 with the holes 8a of the work stand 8.

At step S11, the controller 10 moves the probe 6 to its initial position. For example, the controller 10 moves the probe 6 toward the position coordinate of a hole 8a read from the hole coordinate table of FIG. 4, and brings the probe 6 into proximity to the hole 8a. When the installed robot 2 is displaced from a predetermined position and a predetermined posture, the probe 6 is not completely fitted with the hole 8a as shown in, for example, FIG. 11A.

More specifically, the controller 10 determines a target position and a target posture of the probe 6 for bringing the probe 6 into proximity to the hole 8a, and also determines rotation angles of the servomotors 51 to 57 that implement the target position and the target posture. Incidentally, since the arm 21 of the robot 2 has a redundant degree of freedom, there are a plurality of combinations of the rotation angles of the servomotors 51 to 57 that can implement the target position and the target posture. From among the plurality of combinations of the rotation angles of the servomotors 51 to 57, the controller 10 selects an optimum combination based on an inverse kinetics algorithm. Here, an exemplary combination to be selected is a combination that has less of a load on the joints 31 to 37.

The operation of bringing the probe 6 into proximity to the hole 8a may be a manual operation.

At steps S12 and S 13, the controller 10 selects one provisional displacement direction from among a plurality of provisional displacement directions, and sets a target value of micro-displacement in the selected provisional displacement direction. The plurality of provisional displacement directions include various directions such as translational directions and rotational directions. Each of the provisional displacement directions preferably contains a component of the insertion direction of the probe 6 into the hole 8a. Here, the insertion direction recognized by the controller 10 is similar to, if not exactly the same as, the actual insertion direction. This ensures setting of a provisional displacement direction containing a component of the insertion direction. In FIGs. 11A and 11B, examples of the plurality of provisional displacement directions are indicated by dashed-line arrows.

At step S 14, the controller 10 determines rotation angles of the servomotors 51 to 57 for implementing the target value of micro-displacement that has been set. At this step as well, the controller 10 selects an optimum combination from among the plurality of combinations of the rotation angles of the servomotors 51 to 57 based on an inverse kinetics algorithm.

At step S15, the controller 10 drives the servomotors 51 to 57 to implement the determined rotation angles of the servomotors 51 to 57. This provides the probe 6 with motive power in the provisional displacement direction, bringing the probe 6 into proximity to the target value of micro-displacement.

At step S16, from a detection signal of the force sensor 7, the controller 10 acquires force information indicating force received by the probe 6 when the probe 6 is provided with the motive power in the provisional displacement direction, and the controller 10 stores the force information in the memory.

The controller 10 performs the above-described processing at steps S12 to S16 for all the provisional displacement directions (S 17). When the processing for all the provisional displacement directions is completed (S17: YES), the controller 10 proceeds the processing to step S18.

At step S18, the controller 10 selects one provisional displacement direction from among the plurality of provisional displacement directions as a displacement direction based on the force information stored in the memory. For example, the provisional displacement direction in which the probe 6 receives the smallest force is selected as the displacement direction. In FIGs. 11A and 11B, examples of the selected displacement direction are indicated by solid-line arrows.

At step S19, the controller 10 drives the servomotors 51 to 57 to displace the probe 6 in the selected displacement direction. Here, the controller 10 may store the rotation angles of the servomotors 51 to 57 determined at step S 14 and use the rotation angles, or the controller 10 may determine rotation angles of the servomotors 51 to 57 anew. The amount of displacement of the probe 6 may be equal to or larger than the above-described micro-displacement. It is also possible to displace the probe 6 in the selected displacement direction until the force received by the probe 6 becomes equal to or larger than a predetermined value.

In the embodiment shown in FIG. 10, the displacement direction is determined after the processing at steps S12 to S16 has been completed for all the provisional displacement directions. When the force received by the probe 6 provided with the motive power in the provisional displacement direction is equal to or smaller than the predetermined value, it is possible to determine the displacement direction before completion of the processing at steps S12 to S16 for all the provisional displacement directions.

At step S20, the controller 10 determines whether the probe 6 is fitted with a hole 8a of the work stand 8 (which is a function as the determination section 11). When the controller 10 determines that the probe 6 is not fitted with the hole 8a of the work stand 8 (S20: NO), the controller 10 repeats the processing at steps S12 to S19.

When the controller 10 determines that the probe 6 is fitted with the hole 8a of the work stand 8 (S20: YES), the controller 10 ends the contact control and proceeds to the above-described calibration processing. FIG. 11C shows a state in which the probe 6 is fitted with the hole 8a of the work stand 8. The controller 10 determines that the probe 6 is fitted with the hole 8a of the work stand 8 when, for example, motive power in the plurality of provisional displacement directions is applied to the probe 6 in approximately the same manner as the processing at steps S12 to S 17 and when the force received by the probe 6 here is equal to or larger than the predetermined value in any of the provisional displacement directions. Reliance solely on the strength of the force received by the probe 6 in the determination of fitting can cause an erroneous determination if the probe 6 is stuck in the middle of the hole 8a in the course of fitting. In view of this, another possible example of fitting determination is to provide a device that detects the insertion amount of the probe 6 and to compare the insertion amount of the probe 6 thus detected with the depth of the hole 8a stored in the hole coordinate table of FIG. 4.

In this embodiment, when the probe 6 is displaced at steps S11 and S14, the rotation angles of the servomotors 51 to 57 are determined based on an inverse kinetics algorithm. Specifically, exemplary rotation angles of the servomotors 51 to 57 to be selected throughout the time until the probe 6 is fitted with the hole 8a of the work stand 8 are those rotation angles that have less of a load on the joints 31 to 37. This ensures accurate calculation of the position coordinate of the distal end of the probe 6 in the calibration processing.

### [Second Embodiment of Contact Control]

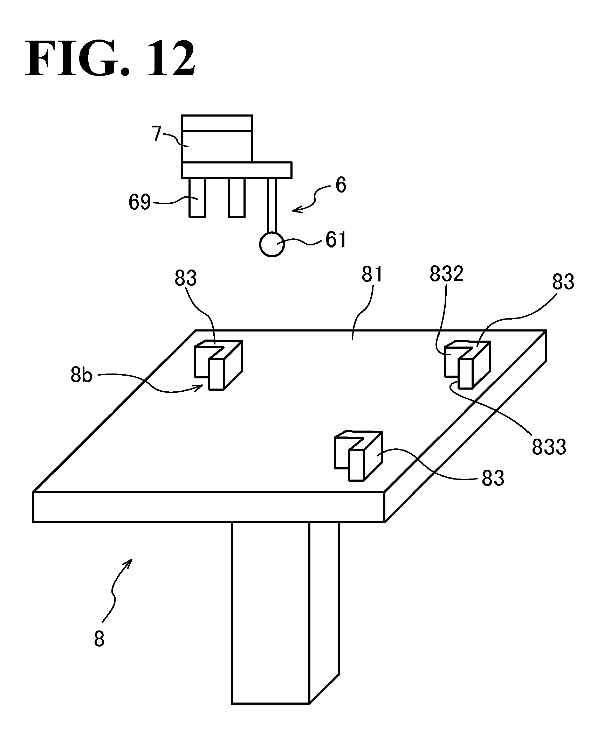

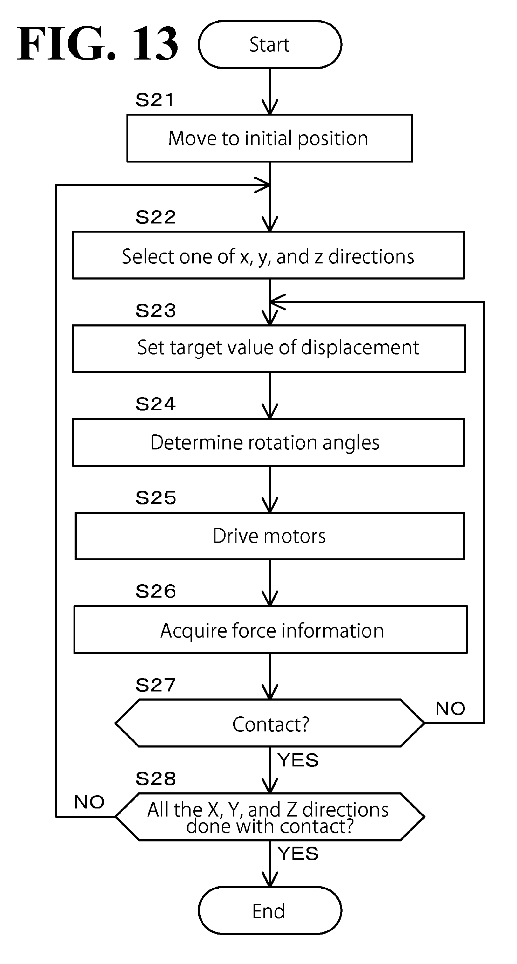

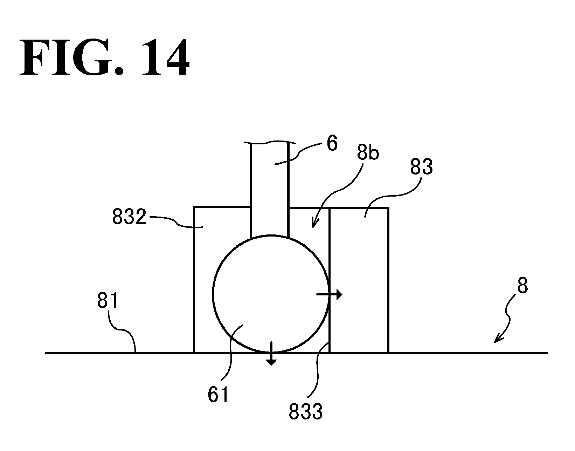

Contact control according to a second embodiment will be described below. FIG. 12 illustrates an exemplary configuration of the distal end of the arm 21 and jigs 83 of the work stand 8. FIG. 13 is a flowchart illustrating the contact control according to the second embodiment, and FIG. 14 schematically illustrates the contact control according to the second embodiment.

As shown in FIG. 12, in this embodiment, a plurality of L-shaped jigs 83 are disposed on a surface 81 of the work stand 8. Each of the L-shaped jigs 83 has two inner surfaces 832 and 833, which intersect the surface 81 of the work stand 8 and define a recessed portion 8b. The jigs 83, which are disposed on the surface 81 of the work stand 8, are examples of the structure disposed on the work stand 8. In this embodiment, the probe 6 and a hand 69 are disposed side by side on the distal end of the arm 21, and the probe 6 includes a spherical distal end portion 61.

In this embodiment, a direction orthogonal to the surface 81 of the work stand 8 will be assumed a Z direction, and directions orthogonal to the two surfaces 832 and 833 of the jig 83 will be assumed an X direction and a Y direction. When the installed robot 2 is displaced from a predetermined posture, the X, Y, and Z directions recognized by the controller 10 may not be exactly the same as actual X, Y, and Z directions. Even though a slight tolerance occurs, the contact control described below is not particularly affected.

In this embodiment, the controller 10 drives the servomotors 51 to 57 to move the probe 6 while maintaining its posture. Specifically, the controller 10 determines the target position of the probe 6 so as to bring the probe 6 into proximity to the jig 83 of the work stand 8. At the same time, while maintaining the target posture of the probe 6, the controller 10 calculates the rotation angles of the servomotors 51 to 57 to implement the target position and the target posture. For example, in this embodiment, the controller 10 maintains the posture of the probe 6 to keep the extending direction of the probe 6 along the Z direction.

At step S21, the controller 10 moves the probe 6 to its initial position. For example, the controller 10 moves the probe 6 toward a position coordinate of the jig 83 stored in advance to bring the probe 6 into proximity to the jig 83. Here, assume that the distal end portion 61 of the probe 6 is on the side of the recessed portion 8b of the jig 83 at the time when the probe 6 is moved to its initial position.

More specifically, the controller 10 determines the target position of the probe 6 to bring the probe 6 into proximity to the jig 83. At the same time, while maintaining the target posture of the probe 6, the controller 10 determines the rotation angles of the servomotors 51 to 57 to implement the target position and the target posture. Incidentally, the arm 21 of the robot 2 has seven degrees of freedom. Among the seven degrees of freedom, three degrees of rotational freedom are used to maintain the posture of the probe 6, and the rest of the degrees of freedom include one redundant degree of freedom in addition to three degrees of translational freedom. Hence, there are a plurality of combinations of the rotation angles of the servomotors 51 to 57 that can implement the target position and the target posture. From among the plurality of combinations of the rotation angles of the servomotors 51 to 57, the controller 10 selects an optimum combination based on an inverse kinetics algorithm to which a limitation condition to maintain the target posture of the probe 6 is added.

The operation of bringing the probe 6 into proximity to the jig 83 may be a manual operation.

At step S22, the controller 10 selects one direction from among the X, Y, and Z directions.

At steps S23, S24, and S25, the controller 10 sets a target value of the amount of displacement of the probe 6 in the selected direction, determines rotation angles of the servomotors 51 to 57 to implement the set target value of the displacement amount, and drives the servomotors 51 to 57. At this stage as well, from among the plurality of combinations of the rotation angles of the servomotors 51 to 57, the controller 10 selects an optimum combination based on an inverse kinetics algorithm to which a limitation condition to maintain the target posture of the probe 6 is added. Thus, the probe 6 is displaced in the selected direction in the maintained posture.

At steps S26 and S27, from a detection signal of the force sensor 7, the controller 10 acquires force information indicating force received by the probe 6 when the probe 6 is displaced in the selected direction. Thus, the controller 10 determines whether the distal end portion 61 of the probe 6 is in contact state. Specifically, when the force received by the probe 6 is equal to or larger than a predetermined value, the controller 10 determines that the distal end portion 61 of the probe 6 is in contact state.

When the controller 10 determines that the distal end portion 61 of the probe 6 is not in contact state (S27: NO), the controller 10 repeats the processing at steps S23 to S26.

When the controller 10 determines that the distal end portion 61 of the probe 6 is in contact state (S27: YES), the controller 10 performs the processing at steps S22 to S27 for the other directions (S28: NO).

When the controller 10 determines that the distal end portion 61 of the probe 6 is in contact state for all the X, Y, and Z directions (S28: YES), the controller 10 ends the contact control and proceeds to the above-described calibration processing. Here, as shown in FIG. 14, the distal end portion 61 of the probe 6 is in contact with all of the two inner surfaces 832 and 833 of the L-shaped jig 83 and the surface 81 of the work stand 8.

In the calibration processing, for all the X, Y, and Z directions, the controller 10 acquires the rotation angles of the servomotors 51 to 57 at the time when the distal end portion 61 of the probe 6 is in contact state. Then, the controller 10 calculates a position coordinate of the distal end portion 61 of the probe 6, and calculates a position correction amount based on the difference between the calculated position coordinate of the distal end portion 61 of the probe 6 and the position coordinate of the jig 83 stored in advance.

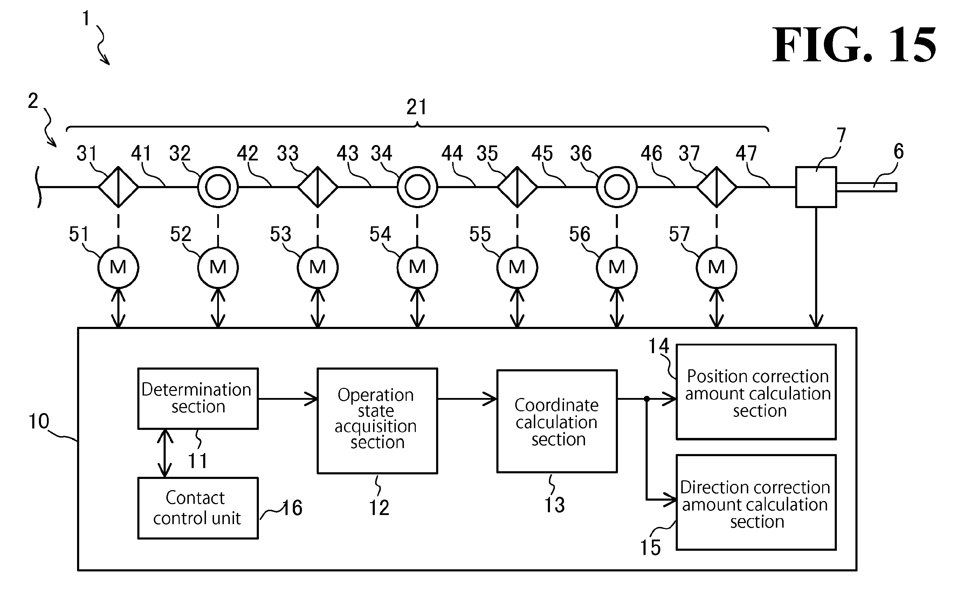

In a third embodiment and a fourth embodiment, the controller 10 further includes a contact control unit 16 as shown in, for example, FIG. 15. Also the contact control unit 16 and the determinator 11 implement the above-described contact control.

### [Third Embodiment of Contact Control]

Description will be made with regard to a third embodiment of the contact control of fitting the probe 6 with the holes 8a of the work stand 8. FIG. 10 is a flowchart illustrating the contact control according to the third embodiment, and FIGs. 11A to 11C schematically illustrate the contact control according to the third embodiment. In this contact control, the contact control unit 16 drives the servomotors 51 to 57 to fit the probe 6 with the holes 8a of the work stand 8.

At step S11, the contact control unit 16 moves the probe 6 to its initial position. For example, the contact control unit 16 moves the probe 6 toward the position coordinate of a hole 8a read from the hole coordinate table of FIG. 4, and brings the probe 6 into proximity to the hole 8a. When the installed robot 2 is displaced from a predetermined position and a predetermined posture, the probe 6 is not completely fitted with the hole 8a as shown in, for example, FIG. 11A.

More specifically, the contact control unit 16 determines a target position and a target posture of the probe 6 for bringing the probe 6 into proximity to the hole 8a, and also determines rotation angles of the servomotors 51 to 57 that implement the target position and the target posture. Incidentally, since the arm 21 of the robot 2 has a redundant degree of freedom, there are a plurality of combinations of the rotation angles of the servomotors 51 to 57 that can implement the target position and the target posture. From among the plurality of combinations of the rotation angles of the servomotors 51 to 57, the contact control unit 16 selects an optimum combination based on an inverse kinetics algorithm. Here, an exemplary combination to be selected is a combination that has less of a load on the joints 31 to 37.

The operation of bringing the probe 6 into proximity to the hole 8a may be a manual operation.

At steps S12 and S13, the contact control unit 16 selects one provisional displacement direction from among a plurality of provisional displacement directions, and sets a target value of micro-displacement in the selected provisional displacement direction. The plurality of provisional displacement directions include various directions such as translational directions and rotational directions. Each of the provisional displacement directions preferably contains a component of the insertion direction of the probe 6 into the hole 8a. Here, the insertion direction recognized by the contact control unit 16 is similar to, if not exactly the same as, the actual insertion direction. This ensures setting of a provisional displacement direction containing a component of the insertion direction. In FIGs. 11A and 11B, examples of the plurality of provisional displacement directions are indicated by dashed-line arrows.

At step S 14, the contact control unit 16 determines rotation angles of the servomotors 51 to 57 for implementing the target value of micro-displacement that has been set. At this step as well, the contact control unit 16 selects an optimum combination from among the plurality of combinations of the rotation angles of the servomotors 51 to 57 based on an inverse kinetics algorithm.

At step S15, the contact control unit 16 drives the servomotors 51 to 57 to implement the determined rotation angles of the servomotors 51 to 57. This provides the probe 6 with motive power in the provisional displacement direction, bringing the probe 6 into proximity to the target value of micro-displacement.

At step S16, from a detection signal of the force sensor 7, the contact control unit 16 acquires force information indicating force received by the probe 6 when the probe 6 is provided with the motive power in the provisional displacement direction, and the contact control unit 16 stores the force information in the memory.

The contact control unit 16 performs the above-described processing at steps S12 to S16 for all the provisional displacement directions (S17). When the processing for all the provisional displacement directions is completed (S17: YES), the contact control unit 16 proceeds the processing to step S18.

At step S18, the contact control unit 16 selects one provisional displacement direction from among the plurality of provisional displacement directions as a displacement direction based on the force information stored in the memory. For example, the provisional displacement direction in which the probe 6 receives the smallest force is selected as the displacement direction. In FIGs. 11A and 11B, examples of the selected displacement direction are indicated by solid-line arrows.

At step S19, the contact control unit 16 drives the servomotors 51 to 57 to displace the probe 6 in the selected displacement direction. Here, the contact control unit 16 may store the rotation angles of the servomotors 51 to 57 determined at step S14 and use the rotation angles, or the contact control unit 16 may determine rotation angles of the servomotors 51 to 57 anew. The amount of displacement of the probe 6 may be equal to or larger than the above-described micro-displacement. It is also possible to displace the probe 6 in the selected displacement direction until the force received by the probe 6 becomes equal to or larger than a predetermined value. When the contact control unit 16 has finished the step S19 (i.e. driving the servomotors 51 to 57), the contact control unit 16 may notify the determinator 11 of finishing the step S19 (i.e. driving the servomotors 51 to 57). In this case, when the determinator 11 receives the notification (i.e. finishing the step S19 by the contact control unit 16), the determinator 11 may begin to implement the following step S20.

In the embodiment shown in FIG. 10, the displacement direction is determined after the processing at steps S12 to S16 has been completed for all the provisional displacement directions. When the force received by the probe 6 provided with the motive power in the provisional displacement direction is equal to or smaller than the predetermined value, it is possible to determine the displacement direction before completion of the processing at steps S12 to S16 for all the provisional displacement directions.

At step S20, the determinator 11 determines whether the probe 6 is fitted with a hole 8a of the work stand 8. When the determinator 11 determines that the probe 6 is not fitted with the hole 8a of the work stand 8 (S20: NO), the determinator 11 commands the contact control unit 16 to repeat the processing at steps S12 to S19.

When the determinator 11 determines that the probe 6 is fitted with the hole 8a of the work stand 8 (S20: YES), the determinator 11 commands the contact control unit 16 to end the contact control. Then, the determinator 11 proceeds to the above-described calibration processing. FIG. 11C shows a state in which the probe 6 is fitted with the hole 8a of the work stand 8. The determinator 11 determines that the probe 6 is fitted with the hole 8a of the work stand 8 when, for example, motive power in the plurality of provisional displacement directions is applied to the probe 6 in approximately the same manner as the processing at steps S12 to S 17 and when the force received by the probe 6 here is equal to or larger than the predetermined value in any of the provisional displacement directions. Reliance solely on the strength of the force received by the probe 6 in the determination of fitting can cause an erroneous determination if the probe 6 is stuck in the middle of the hole 8a in the course of fitting. In view of this, another possible example of fitting determination is to provide a device that detects the insertion amount of the probe 6 and to compare the insertion amount of the probe 6 thus detected with the depth of the hole 8a stored in the hole coordinate table of FIG. 4.

In this embodiment, when the probe 6 is displaced at steps S11 and S14, the rotation angles of the servomotors 51 to 57 are determined based on an inverse kinetics algorithm. Specifically, exemplary rotation angles of the servomotors 51 to 57 to be selected throughout the time until the probe 6 is fitted with the hole 8a of the work stand 8 are those rotation angles that have less of a load on the joints 31 to 37. This ensures accurate calculation of the position coordinate of the distal end of the probe 6 in the calibration processing.

### [Fourth Embodiment of Contact Control]

Contact control according to the fourth embodiment will be described below. FIG. 12 illustrates an exemplary configuration of the distal end of the arm 21 and jigs 83 of the work stand 8. FIG. 13 is a flowchart illustrating the contact control according to the fourth embodiment, and FIG. 14 schematically illustrates the contact control according to the fourth embodiment.

As shown in FIG. 12, in this embodiment, a plurality of L-shaped jigs 83 are disposed on a surface 81 of the work stand 8. Each of the L-shaped jigs 83 has two inner surfaces 832 and 833, which intersect the surface 81 of the work stand 8 and define a recessed portion 8b. The jigs 83, which are disposed on the surface 81 of the work stand 8, are examples of the structure disposed on the work stand 8. In this embodiment, the probe 6 and a hand 69 are disposed side by side on the distal end of the arm 21, and the probe 6 includes a spherical distal end portion 61.

In this embodiment, a direction orthogonal to the surface 81 of the work stand 8 will be assumed a Z direction, and directions orthogonal to the two surfaces 832 and 833 of the jig 83 will be assumed an X direction and a Y direction. When the installed robot 2 is displaced from a predetermined posture, the X, Y, and Z directions recognized by the contact control unit 16 may not be exactly the same as actual X, Y, and Z directions. Even though a slight tolerance occurs, the contact control described below is not particularly affected.

In this embodiment, the contact control unit 16 drives the servomotors 51 to 57 to move the probe 6 while maintaining its posture. Specifically, the contact control unit 16 determines the target position of the probe 6 so as to bring the probe 6 into proximity to the jig 83 of the work stand 8. At the same time, while maintaining the target posture of the probe 6, the contact control unit 16 calculates the rotation angles of the servomotors 51 to 57 to implement the target position and the target posture. For example, in this embodiment, the contact control unit 16 maintains the posture of the probe 6 to keep the extending direction of the probe 6 along the Z direction.

At step S21, the contact control unit 16 moves the probe 6 to its initial position. For example, the contact control unit 16 moves the probe 6 toward a position coordinate of the jig 83 stored in advance to bring the probe 6 into proximity to the jig 83. Here, assume that the distal end portion 61 of the probe 6 is on the side of the recessed portion 8b of the jig 83 at the time when the probe 6 is moved to its initial position.

More specifically, the contact control unit 16 determines the target position of the probe 6 to bring the probe 6 into proximity to the jig 83. At the same time, while maintaining the target posture of the probe 6, the contact control unit 16 determines the rotation angles of the servomotors 51 to 57 to implement the target position and the target posture. Incidentally, the arm 21 of the robot 2 has seven degrees of freedom. Among the seven degrees of freedom, three degrees of rotational freedom are used to maintain the posture of the probe 6, and the rest of the degrees of freedom include one redundant degree of freedom in addition to three degrees of translational freedom. Hence, there are a plurality of combinations of the rotation angles of the servomotors 51 to 57 that can implement the target position and the target posture. From among the plurality of combinations of the rotation angles of the servomotors 51 to 57, the contact control unit 16 selects an optimum combination based on an inverse kinetics algorithm to which a limitation condition to maintain the target posture of the probe 6 is added.

The operation of bringing the probe 6 into proximity to the jig 83 may be a manual operation.

At step S22, the contact control unit 16 selects one direction from among the X, Y, and Z directions.

At steps S23, S24, and S25, the contact control unit 16 sets a target value of the amount of displacement of the probe 6 in the selected direction, determines rotation angles of the servomotors 51 to 57 to implement the set target value of the displacement amount, and drives the servomotors 51 to 57. At this stage as well, from among the plurality of combinations of the rotation angles of the servomotors 51 to 57, the contact control unit 16 selects an optimum combination based on an inverse kinetics algorithm to which a limitation condition to maintain the target posture of the probe 6 is added. Thus, the probe 6 is displaced in the selected direction in the maintained posture.

At steps S26 and S27, from a detection signal of the force sensor 7, the determinator 11 acquires force information indicating force received by the probe 6 when the probe 6 is displaced in the selected direction. Thus, the determinator 11 determines whether the distal end portion 61 of the probe 6 is in contact state. Specifically, when the force received by the probe 6 is equal to or larger than a predetermined value, the determinator 11 determines that the distal end portion 61 of the probe 6 is in contact state.

When the determinator 11 determines that the distal end portion 61 of the probe 6 is not in contact state (S27: NO), the determinator 11 commands the contact control unit 16 to repeat the processing at steps S23 to S26.

When the determinator 11 determines that the distal end portion 61 of the probe 6 is in contact state (S27: YES), the determinator 11 commands the contact control unit 16 to perform the processing at steps S22 to S27 for the other directions (S28: NO).

When the determinator 11 determines that the distal end portion 61 of the probe 6 is in contact state for all the X, Y, and Z directions (S28: YES), the determinator 11 commands the contact control unit 16 to end the contact control and proceeds to the above-described calibration processing. Here, as shown in FIG. 14, the distal end portion 61 of the probe 6 is in contact with all of the two inner surfaces 832 and 833 of the L-shaped jig 83 and the surface 81 of the work stand 8.

In the calibration processing, for all the X, Y, and Z directions, the operation state acquisitor 12 acquires the rotation angles of the servomotors 51 to 57 at the time when the distal end portion 61 of the probe 6 is in contact state. Then, the coordinate calculator 13 calculates a position coordinate of the distal end portion 61 of the probe 6, and the position correction amount calculator 14 calculates a position correction amount based on the difference between the calculated position coordinate of the distal end portion 61 of the probe 6 and the position coordinate of the jig 83 stored in advance.

Regarding the above-described third embodiment and fourth embodiment, the contact control unit 16 included in the controller 10 should not be construed in a limiting sense. Another possible example is that the contact control unit 16 may be separate from the controller 10. Also the contact control unit 16 may be tangible (for example, in the form of device, apparatus and/or electrical circuit) or intangible (for example, in the form of program and/or software).

Obviously, numerous modifications and variations of the present disclosure are possible in light of the above teachings. It is therefore to be understood that within the scope of the appended claims, the present disclosure may be practiced otherwise than as specifically described herein.
- 1: Robot system
- 2: Robot
- 21: Arm
- 31 to 37: Joint
- 41 to 47: Link
- 51 to 57: Servomotor (example of the actuator)
- 6: Probe
- 61: Distal end portion
- 69: Hand
- 7: Force sensor
- 8: Work stand
- 8a: Hole
- 8b: Recessed portion
- 81: Surface
- 83: Jig
- 832, 833: Surface
- 9: Carriage
- 10: Controller (example of the robot control apparatus)
- 11: Determination section
- 12: Operation state acquisition section
- 13: Coordinate calculation section
- 14: Position correction amount calculation section
- 15: Direction correction amount calculation section

## Claims

1. A robot system (1), **characterized by**:
a robot (2) comprising:
an arm (21) comprising a plurality of joints (31) to (37);
a plurality of actuators (51) to (57) configured to drive the plurality of joints (31) to (37);
a plurality of sensors configured to detect operation states of the plurality of actuators (51) to (57);
a probe (6) mounted on the arm (21); and
a force sensor (7) configured to detect force received by the probe (6); and
a controller (10) configured to control the robot (2), the controller (10) comprising:
a determination section (11) configured to determine whether the force received by the probe (6) from a structure disposed at a predetermined position on a work stand (8) satisfies a predetermined condition;
an operation state acquisition section (12) configured to acquire the operation states of the plurality of actuators (51) to (57) when the force received by the probe (6) satisfies the predetermined condition;
a coordinate calculation section (13) configured to calculate a position coordinate of the probe (6) based on the operation states of the plurality of actuators (51) to (57); and
a position correction amount calculation section (14) configured to calculate a correction amount of a position of the work stand (8) relative to the robot (2) based on the position coordinate of the probe (6).

2. The robot system (1) according to claim 1, wherein the structure on the work stand (8) comprises a plurality of structures.

3. The robot system (1) according to claim 2, wherein the controller (10) further comprises a direction correction amount calculation section (15) configured to calculate a correction amount of the work stand (8) in a reference direction relative to the robot (2) based on the position coordinate of the probe (6) calculated for each of the plurality of structures.

4. The robot system (1) according to claim 1, wherein the determination section (11) is configured to determine whether the probe (6) is in contact with the structure in a predetermined posture.

5. The robot system (1) according to claim 1,
wherein the probe (6) and the structure have shapes that are fittable with each other, and
wherein the determination section (11) is configured to determine whether the probe (6) and the structure are fitted with each other.

6. The robot system (1) according to claim 5, further comprising a contact control unit configured to control the plurality of actuators (51) to (57) to bring the probe (6) into contact with the structure, wherein based on force received by the probe (6) when motive power in a plurality of directions is applied to the probe (6), the contact control unit is configured to select one direction among the plurality of directions as a displacement direction of the probe (6).

7. The robot system (1) according to claim 6, wherein the contact control unit is configured to determine operation states of the plurality of actuators (51) to (57) based on an inverse kinetics algorithm when the motive power in the plurality of directions is applied to the probe (6).

8. The robot system (1) according to claim 1,
wherein the structure comprises three surfaces intersecting to each other to define a recessed portion (8b), and
wherein the determination section (11) is configured to determine whether the probe (6) is in contact with the three surfaces.

9. The robot system (1) according to claim 8, further comprising a contact control unit (16) configured to control the plurality of actuators (51) to (57) to bring the probe (6) into contact with the structure, wherein the contact control unit (16) is configured to displace the probe (6) while keeping the probe (6) in a predetermined posture.

10. The robot system (1) according to claim 9, wherein the contact control unit (16) is configured to determine the operation states of the plurality of actuators (51) to (57) based on an inverse kinetics algorithm to which a limitation condition to keep the probe (6) in the predetermined posture is added.

11. A robot control apparatus (10) configured to control a robot (2), the robot (2) comprising:
an arm (21) comprising a plurality of joints (31) to (37);
a plurality of actuators (51) to (57) configured to drive the plurality of joints (31) to (37);
a plurality of sensors configured to detect operation states of the plurality of actuators (51) to (57);
a probe (6) mounted on the arm (21); and
a force sensor (7) configured to detect force received by the probe (6),
the robot control apparatus (10) being **characterized by**:
a determination section (11) configured to determine whether the force received by the probe (6) from a structure disposed at a predetermined position on a work stand (8) satisfies a predetermined condition;
an operation state acquisition section (12) configured to acquire the operation states of the plurality of actuators (51) to (57) when the force received by the probe (6) satisfies the predetermined condition;
a coordinate calculation section (13) configured to calculate a position coordinate of the probe (6) based on the operation states of the plurality of actuators (51) to (57); and
a position correction amount calculation section (14) configured to calculate a correction amount of a position of the work stand (8) relative to the robot (2) based on the position coordinate of the probe (6).

12. A method for controlling a robot (2), the robot (2) comprising:
an arm (21) comprising a plurality of joints (31) to (37);
a plurality of actuators (51) to (57) configured to drive the plurality of joints (31) to (37);
a plurality of sensors configured to detect operation states of the plurality of actuators (51) to (57);
a probe (6) mounted on the arm (21); and
a force sensor (7) configured to detect force received by the probe (6),
the method being **characterized by**:
determining whether the force received by the probe (6) from a structure disposed at a predetermined position on a work stand (8) satisfies a predetermined condition;
acquiring the operation states of the plurality of actuators (51) to (57) when the force received by the probe (6) satisfies the predetermined condition;
calculating a position coordinate of the probe (6) based on the operation states of the plurality of actuators (51) to (57); and
calculating a correction amount of a position of the work stand (8) relative to the robot (2) based on the position coordinate of the probe (6).
